# EUROPEAN PATENT SPECIFICATION

(11) **EP 3 274 158 B1**
(45) Date of publication and mention of the grant of the patent: **19.06.2019**
(21) Application number: 16715397.2
(22) Date of filing: 18.03.2016
(51) Int. Cl.: B29C 67/24, B29C 45/14, F16L 58/10, F16L 59/14, F16L 59/16, B29C 39/10, B29L 23/00, B29C 39/32, B29C 45/00

(54) **METHOD FOR INSULATING COMPLEX SUBSEA STRUCTURES**
VERFAHREN ZUR ISOLIERUNG KOMPLEXER UNTERWASSERSTRUKTUREN
PROCÉDÉ POUR L'ISOLATION DE STRUCTURES SOUS-MARINES COMPLEXES

(30) Priority: 24.03.2015 US 201562137361 P
(43) Date of publication of application: 31.01.2018
(73) Proprietor: Dow Global Technologies LLC, Midland, MI 48674 (US)
(72) Inventor: FENG, Jie, Midland, MI 48674 (US); BROWN, Mark W., Freeport, TX 77541 (US); CHEN, Xue, Freeport, TX 77541 (US); GUPTA, Pankaj, Freeport, TX 77541 (US); LATHAM, Dwight D., Freeport, TX 77541 (US); MA, Liangkai, Midland, MI 48674 (US); MALANGA, Michael T., Midland, MI 48674 (US); MEHTA, Rujul M., Freeport, TX 77541 (US); VYAKARANAM, Kamesh R., Missouri City, TX 77459 (US); WENZEL, Jeffrey D., Midland, MI 48674 (US); ZAWISZA, Jeffery D., Midland, MI 48674 (US)
(74) Representative: Murgitroyd & Company
(86) International application number: PCT/US2016/023018
(87) International publication number: WO 2016/153956

(56) References cited:
- EP-A1- 2 636 520
- US-A1- 2013 291 992

## Description

### FIELD OF THE INVENTION

This invention relates to the field of insulated pipelines and structures, and in particular to the field of subsea pipelines and structures and pipelines for use in deep water.

### BACKGROUND OF THE INVENTION

Offshore oil drilling requires the conveyance of oil from underwater wellheads to shore or other surface installations for further distribution. The resistance to flow of liquid products such as oil increases as temperature decreases. To avoid a substantial decrease in temperature, the pipelines are generally insulated. Furthermore, the underwater environment exposes equipment to compressive forces, near-freezing water temperatures, possible water absorption, salt water corrosion, undersea currents and marine life.

Polyurethanes are often used for insulating such subsea applications due to general ease of processing (two-component molding) and good mechanical properties (strong and tough elastomer). However, such insulation may suffer from hydrolytic degradation when exposed to hot-wet environments. In fields where the oil temperature is high at the wellhead, there is a possibility of degradation of the polymer network if water were to ingress, which would negatively impact the insulation performance of the materials.

USP 8,951,619, assigned to the assignee of the present invention, discloses an amine cured epoxy elastomeric material that combines the processing and mechanical properties of a polyurethane elastomer with improved thermal-hydrolytic stability.

Alternatively, syntactic foam is a known insulator for deep-sea pipeline insulation. Syntactic foams are composite materials in which hollow structures, such as microspheres are dispersed in a resin matrix. USP 6,058,979 discloses a semi-rigid syntactic foam for use in deep-sea operations. Significantly, the syntactic foam disclosed in this patent is strong enough to support the macrospheres and provide the requisite crush strength for deep-sea operations, while flexible enough to sustain the bending while being laid.

However, existing insulated pipeline comprising one of the above mentioned insulating materials, while demonstrating a number of significant advantages, can still have certain limitations, for example cracking. For instance, shrinkage caused during curing may cause internal stresses that can lead to cracks in the insulation. Cracking may also occur when the insulation material and underlying steel equipment are heated and cooled. During heating the inner surface of the insulation material (adjacent the hot steel equipment) expands more than the outer surface of the insulation material (adjacent the cold sea water). This differential expansion may also causes cracking. During cooling, the insulation material shrinks more and faster than the steel equipment, causing more cracking.

EP 1070906 disclosed a multi-step method to reduce cracking wherein the first step is to premold an insulation layer, the second step is applying the premolded insulation layer to a pipe, and the third step is jacketing the pipe and premolded insulation with yet another layer of material, the same or different from which the premold is made.

There exists a need for an improved and cost effective method to insulate subsea pipeline and equipment which is easy to install and reduces internal stresses and cracking in the molded insulation.

### SUMMARY OF THE INVENTION

The present invention is a process in accordance with claim 1, for insulating a pipe comprising one or more branch, preferably a tee, a valve, a double valve, a vent, a port, or a flange comprising the steps of: (i) providing a preform which is in contact with the pipe and near or in contact with the branch to form a pipe/preform assembly and (ii) molding a layer of insulating material around the pipe/preform assembly.

In one embodiment of the process of the invention described herein above, the process further comprises the step of: (i)(a) adhering the preform to the pipe, the branch, or the pipe and the branch.

In one embodiment of the process of the invention described herein above, the process further comprises the steps of: (i)(b) positioning a mold around the pipe/preform assembly and (i)(c) casting the insulating material between the pipe/preform assembly and the mold.

In one embodiment of the process of the invention described herein above, the process further comprises the step of cleaning the pipe prior to providing the preform.

In one embodiment of the process of the invention described herein above, the process further comprises the step of providing a protective coating to the pipe after it has been cleaned but before the preform is provided.

In one embodiment of the process of the invention described herein above, the insulating material comprises the reaction product of: (a) an ambient temperature liquid epoxy-terminated prepolymer and (b) a catalytic curing agent, preferably ethyltriphenylphosphonium; benzyltrimethylammonium chloride; a heterocyclic nitrogen-containing catalyst; an imidazole; a triethylamine; or dodecylbenzenesulfonic acid in isopropanol or a co-reactive curing agent, preferably a polyamine, a polyamide, a polyaminoamide, a dicyandiamide, a polyphenol, a polymeric thiol, a polycarboxylic acid, an anhydride, a phenol novolac, a bisphenol-A novolac, a phenol novolac of dicyclopentadiene, a cresol novolac, a diaminodiphenylsulfone, or a styrene-maleic acid anhydride (SMA) copolymers.

In one embodiment of the process of the invention described herein above, the insulating material further comprises one or more additional epoxy resin.

In one embodiment of the process of the invention described herein above, the insulating material further comprises one or more of a filler, a thickener, a dispersing agent, a pigment, an antistatic agent, a corrosion inhibitor, a preservative, a siliconizing agent, a rheology modifier, an anti-settling agent, or an anti-oxidants.

In one embodiment of the process of the invention described herein above the insulating material is useful for thermal insulation for subsea oil and gas applications.

### BRIEF DESCRIPTION OF DRAWINGS

**FIG.1** is a perspective view of a pipe comprising a single and a double valve.
**FIG.2** is a perspective view of the pipe shown in **FIG. 1** comprising preforms of the present invention.
**FIG.3** is a perspective view of the pipe/preform assembly shown in **FIG. 3** within one half of a mold.
**FIG.4** is a perspective view of the pipe/preform assembly within a complete mold.
**FIG.5** is a perspective view of the insulated pipe/preform assembly removed from the mold.
**FIG.6** is a sectional view of the insulated pipe/preform assembly shown in **FIG. 5****.**
**FIG. 7** is flow chart illustration of one embodiment of the process of the present invention.
**FIG. 8** is a photograph of a pipe/preform assembly of Example 1.
**FIG. 9** is a photograph of the insulated pipe/preform assembly of Example 1.
**FIG.10** is a perspective view of the calculated stress analysis for a sectional view of the insulated pipe without preforms.
**FIG.11** is a perspective view of the calculated stress analysis for a sectional view of the insulated pipe/preform assembly of Example 1.

### DETAILED DESCRIPTION OF THE INVENTION

The process of the present invention reduces internal stresses which can lead to cracking in the molded insulation on complex pipe, preferably complex subsea pipe. We have found that insulation material injected around a pipe having a branch, may be susceptible to cracking at, or near where the branch connects to the pipe as the coating of insulation material cures or hardens. Without being held to any particular theory, we believe cracking may be a result of higher material stress in the applied coating at the branch/pipe juncture due to one or more of: higher material temperature, increased cooling time of the applied coating, thicker material deposition, and/or greater chemical/physical shrinkage of the insulation material in combination with geometrical restrictions as a result of protrusions from the nominal straight pipe.

The process of the present invention aims to reduce post molded cracking by reducing molded in stress at the branch/pipe junction. This is accomplished by providing a preform at or near a branch/pipe junction prior to applying the coating of insulation material.

Provided herein is a system and method for insulating subsea flow lines or pipes, more specifically, pipes comprising one or more branch. As defined herein, a branch is any part of a piping system other than the main pipe, generally any protrusion from the surface of the pipe. For example, a branch may be a valve, a double valve, a tee, a vent, a port, a flange, or any other structure that protrudes outward from the pipe. A branch has an outside surface and an inside surface.

The pipe to be insulated may have any outside diameter, inside diameter, and length. The pipe has an outside surface and an inside surface.

In another embodiment of the method of the present invention, insulation may be applied to subsea equipment such as a connector, a manifold, a tree, a pipeline end termination, a jumper, a valve, or other similar equipment.

In one embodiment of the process of the present invention, the pipe is cleaned prior to providing the preform. Cleaning methods include surface dust wiping off, surface sanding, surface dissolve cleaning, scraping, and the like. Any suitable cleaning solution and/or procedure used for cleaning such pipe can be used.

In another embodiment of the process of the present invention, a protective coating is applied to the pipe before the preform is provided. Preferably, the protective coating is applied after the pipe is cleaned but before the preform is provided. Examples of a protective coating are an anti corrosion coating and an adhesion promoting coating.

A preform is placed at (i.e., touching) or near the branch/pipe juncture (i.e., a distance equal to or less than the thickness of the applied coating). After the insulation material coating is applied, preferably, the preform reduces the maximum material temperature and total chemical/physical material shrinkage of the insulation material coating surrounding the preform and pipe. Lower temperature results in less cooling and chemical/physical induced shrinkage which produces less stress and provides a more robust, crack resistant coating.

A preform may be any suitable shaped that is designed for a specific branch, it may be square, rectangular, round, or the like. Generally, a preform has a topside surface, a bottom side surface which contacts or is in near proximity of the outer surface of the pipe, an inside surface which is in contact or in near proximity of the outside surface of the branch and an outside surface.

For the embodiment where the preform is cylindrical in shape and surrounds a branch, the cylindrical preform has a topside surface, a bottom side surface which contacts or is in near proximity of the outer surface of the pipe, an inside which is in contact or in near proximity of the outside surface of the branch and an outside surface.

The preform of the present invention may be polymeric, such as polymers including thermoset or thermoplastics, for example urethanes, epoxies, silicones, polypropylene, vinyl esters, or polyester. Polymeric material may be solid, filled, or foamed depending on the requirements of the specific application. Example of suitable fillers is glass microspheres, fibers, and the like. Preferably, preform plastic materials are easy to process processing (flow, cure, molding, machining) to be able to produce curved, straight-line and flexible sections without special procedures.

From a property stand point, it is desirable that the preform material has low thermal conductivity in the range of .02 to 2 W/mK as characterized using either steady-state techniques such as the Guarded Hot Plate Method conforming to ASTM C177 and ISO 8302, Heat Flow Meter System in accordance with ASTM C518 and E1530 or transient methods such as the Hot Wire Method in accordance with ASTM C1113.

Any suitable method of manufacture maybe used to make a preform, for example machining and other forms of cutting or printing from solid material, molded, i.e., injection molded, pour in place, additive manufacturing/3D printed, and the like.

Preferably, the thickness of the preform is from 30% to 70% of the average coating thickness. If the applied insulation coating is too thin, its cure could be low, conversely if the insulation coating is too thick, it will not provide sufficient benefit for reducing the stress.

In one embodiment of the process of the present invention, the preform has a similar thermal conductivity as the pipe and branch being insulated. This can prevent delamination during the molding process.

In one embodiment of the process of the present invention, the bottom surface of the preform contacts the outside surface of the pipe and completely surrounds the branch. However, in other embodiments, the preform does not need to completely surround the branch, but may partially surround the branch.

In one embodiment of the process of the present invention, the bottom side surface of a preform completely contacts the outside surface of the pipe. In other embodiments of the present invention, the bottom side surface of the preform may partially contact the outside surface of the pipe, in other words, there may be a gap between one or more portion of the bottom side of the preform and the outside surface of the pipe.

In one embodiment of the process of the present invention, the entire inside surface of the preform is in contact with the outside surface of the branch. In another embodiment of the process of the present invention only a portion of the inside surface of the preform is in contact with the outside surface of the branch, in other words the preform may be in partial contact with the branch. For example, a preform may completely surround a branch, but only contact the branch in a finite number of contact points and/or sections, there could be 1, 2, 3, 4, 5, 6, 7, 8, 9, 10, and as many contact points and/or sections as necessary. Contact points and/or sections may take any suitable shape; they may be pointed, rounded, blunt, and the like.

In other embodiments of the present invention, the inside surface of the preform may not contact the outside surface of the branch but be located near the outside surface of the branch such that there is a gap separating the preform from the branch. In one such embodiment, when the inside surface of the preform does not contact the outside surface of the branch, the gap that is formed between the two fills with the insulation material when the pipe/preform assembly is coated with the insulation material.

In yet another embodiment of the present invention, relationship of the preform to the pipe and the branch can be any combination of the relationships disclosed hereinabove, for example, the bottom side surface of the preform may completely contact the outer surface of the pipe while the inside surface of the preform may partially contact the outside surface of the branch, or the bottom side surface of the preform may partially contact the outer surface of the pipe while the inside surface of the preform may completely contact the outside surface of the branch, or the bottom side surface of the preform may partially contact the outer surface of the pipe while the inside surface of the preform only partially contacts the outside surface of the branch, or the bottom side surface of the preform may completely contact the outer surface of the pipe while the inside surface of the preform may be near, but not contact the outside surface of the branch, or the bottom side surface of the preform may partially contact the outer surface of the pipe while the inside surface of the preform may be near, but not contact the outside surface of the branch.

In one embodiment of the process of the present invention, the preform is not affixed to either the pipe or the branch.

In another embodiment of the process of the present invention, the preform is affixed to the pipe and/or the branch. Adhesion may be accomplished by any suitable manner, the preform may be molded onto the pipe and/or branch, it may be affixed with double-sided tape, or an adhesive, for example an epoxy or polyurethane based adhesive, may be applied to the bottom side and/or inside surfaces of the preform, the outside surface of the pipe and/or branch, or any combination thereof.

The thickness of the preform is typically equal to or less than the thickness of the insulation layer, more preferably, the thickness of the preform is from 30% to 70% of the thickness of the insulation layer.

In one embodiment of the process of the present invention, the corners or edges of the preform may be rounded.

The insulation material can be installed using a variety of methods. Preferably, the pipe is cleaned and prepared for coating prior to providing the preform. In one embodiment, preparation is accomplished by abraiding the pipe outside surface. In a preferred embodiment, a form or mold is constructed around the pipe/preform assembly to be insulated. The insulation material is then cast between the pipe/preform assembly and the mold and allowed to cure or solidify. Once the material has cured, the mold is removed.

The mold may be a pre-engineered fiberglass, plastic or metal enclosure, the purpose of which is to fit around the pipe/preform assembly to be insulated. Generally, the mold will comprise an enclosure with hinges that can be closed and secured, for example with latches, around the pipe/preform assembly to be insulated. The mold may consist of two or more sections which may be assembled around the pipe/preform assembly. In one embodiment, the mold further comprises gaskets to provide a tight seal between the mold and the pipe/preform assembly to be insulated. The mold includes a receptacle into which the insulation material is injected. Preferably, the insulation material is injected as a liquid solution. In one embodiment, the liquid solution is a combination of an insulation solution and a catalyst solution mixed together during the injection process. After injection into the mold, the liquid solution is then allowed to solidify, forming a molded or overmolded layer of insulation around the pipe/preform assembly.

A mold may have one or more injection port (i.e., where the insulation material is injected into the mold) and one or more vents to allow the escape of displaced air and other gases.

Although a pipe/preform assembly comprising a branch is insulated in one embodiment of the present invention, any subsea equipment wherein a preform may be provided, and said subsea equipment/preform assembly can be surrounded by a mold, may be insulated by certain embodiments of the present invention.

Insulation solutions are well known in the art. Any type of insulation materials that can be injected into a mold and allowed to cure or harden can be used, and such insulation materials may or may not require the use of a catalyst for hardening the insulation. Thus, in some instances, insulation (whether cured or not cured) may refer to the insulation solution or the combination insulation solution and catalyst mixture. One of ordinary skill in the art will appreciate that the volume of insulation solution and, if present, catalyst pumped into the mold will vary based upon the amount of insulation desired for the particular pipe/preform assembly configuration to be insulated, the enclosed volume of the mold, type of insulation solution and, if present, catalyst utilized, and subsea conditions (such as temperature, pressure, and time required to fill the mold) surrounding the item to be insulated.

In one embodiment, suitable insulation materials may be polypropylene material, polyurethane material, or epoxy material.

In one embodiment, a suitable insulation solution that is mixed with a catalyst upon or preceding injection into the mold is DEEPGEL™, offered by Ythan Environmental Services Ltd.

In another embodiment, a porous plastic foam, such as a polyurethane foam may be employed.

In yet another embodiment, the use of syntactic foams has been found suitable for use as an insulation material for deep-sea pipeline insulation. Syntactic foams are composite materials in which hollow structures, such as microspheres are dispersed in a resin matrix. Suitable syntactic foam materials may comprise rubber or plastic elastomers, asphalt or asphaltic mastics, adhesives, oils or other liquids, gels, and wax (paraffin). Preferably, the resin matrix for the syntactic foam component is selected from epoxy, polyester, polystyrene, polyurethane, phenolic, or silicone based plastic resins. Preferably, the hollow microspheres comprise glass, ceramic, plastic, or fiberglass. Suitable syntactic foam composites comprise at least one of the aforementioned resin matrixes with at least one of the aforementioned hollow microspheres dispersed therein. In every case, the appropriate materials will be selected on the basis of service conditions.

In yet another embodiment, a particularly suitable insulation material is a material prepared from amine curing of an epoxy-terminated prepolymer as disclosed in USP 8,951,619, preferably an elastomeric material. The elastomer resins are synthesized in at least two steps: first an epoxy-terminated prepolymer is formed and in the second step, the prepolymer is cured by curing agent to form the final epoxy-based elastomer. Preferably the curing agent useful in the process of the present invention is a catalytic curing agent or a coreactive curing agent. Suitable co-reactive curing agent comprise a polyamine, a polyamide, a polyaminoamide, a dicyandiamide, a polyphenol, a polymeric thiol, a polycarboxylic acid, an anhydride, a phenol novolac, a bisphenol-A novolac, a phenol novolac of dicyclopentadiene, a cresol novolac, a diaminodiphenylsulfone, or a styrene-maleic acid anhydride (SMA) copolymers. Suitable catalytic curing agent comprise ethyltriphenylphosphonium; benzyltrimethylammonium chloride; a heterocyclic nitrogen-containing catalyst; an imidazole; a triethylamine; or dodecylbenzenesulfonic acid in isopropanol.

For ease of manufacturing the final product, it is desirable that the prepolymer formed is a liquid at ambient conditions to promote flow especially when filling complex molds. In a further embodiment, it is desirable that both the epoxy-terminated prepolymer and curing agent are liquid at ambient temperature. Based on the use of an amine-terminated polyether polyol in the formation of the epoxy prepolymer, followed by curing with an amine, the final elastomer contains "soft" structural segments, provided by the polyether. The epoxy portion, when reacted with suitable short polyfunctional amines, provides "hard" structural elements recurring along the ultimate elastomeric polymer chain.

The epoxy-based elastomer, not including any filler, will generally display a percent elongation of greater than 50. In further embodiments the epoxy-based elastomer will have an elongation of at least 60, 70 or 80 percent. When a mono-amine curing agent, such as an alkanolamine curing agent is used, the elongation will generally be greater than 100%. In further embodiments the epoxy-based elastomer will have an elongation of at least 110 and in further embodiments 120% or greater.

In a further embodiment, the presence of the soft and hard segments provide for an epoxy-based elastomer having at least one Tg of less than 0°C. The term "Tg" is used to mean the glass transition temperature and is measured via Differential Scanning Calorimetry (DSC). In a further embodiment, the epoxy-based elastomer will have at least one Tg of less than - 15°C, -20°C, -30°C, or less than -40°C. In a further embodiment, the epoxy-based elastomer will have at least one Tg of less than -20°C and at least one Tg of greater than 50°C.

The epoxy based materials can generally be used in environments where the temperatures are up to about 180°C.

The epoxy-based elastomers of the present invention, without the addition of fillers, generally have a thermal conductivity of less than 0.18 W/m^{∗}K, as determined by ASTM C518. In a further embodiment, the elastomers of the present invention have a thermal conductivity of less than 0.16 W/m^{∗}K. The thermal conductivity may be further reduced with the addition of hollow spheres, such as glass bubbles.

In the present invention, the epoxy-terminated prepolymer is formed by the reaction of a polyoxyalkyleneamine with an epoxy resin. The polyoxyalkyleneamine may also be referred to as an amine terminated polyether. Generally the polyoxyalkyleneamine will have an average molecular weight of at least 3,000 g/mol. Generally the polyoxyalkyleneamine will have an average molecular weight of less than 20,000 g/mol. In a further embodiment the polyoxyalkyleneamine will have a molecular weight of at least 3,500 g/mol. The polyether polyols for producing the polyoxyalkyleneamine are generally obtained by addition of a C₂ to C₈ alkylene oxide to an initiator having a nominal functionality of 2 to 6, that is, having 2 to 6 active hydrogen atoms. In further embodiments, the alkylene oxide will contain 2 to 4 carbon atoms such as ethylene oxide, propylene oxide, butylene oxide and mixtures thereof. When two or more oxides are used, they may be present as random mixtures or as blocks of one or the other polyether.

In a preferred embodiment the polyether polyol will be liquid at room temperatures. In a further embodiment the ethylene oxide content of the polyether polyol will be less than 30, less than 25, less than 20 or less than 15 weight percent ethylene oxide. In one embodiment the polyether polyol is a poly(oxypropylene) polyol. Catalysis for polymerization of alkylene oxide to an initiator can be either anionic or cationic. Commonly used catalysts for polymerization of alkylene oxides include KOH, CsOH, boron trifluoride, a double cyanide complex (DMC) catalyst such as zinc hexacyanocobaltate or quaternary phosphazenium compound.

Examples of commonly used initiators include glycerol, trimethylol propane, sucrose, sorbitol, pentaerythritol, ethylene diamine and aminoalcohols, such as, ethanolamine, diethanolamine, and triethanolamine. In a further embodiment the initiator for the polyether contains from 3 to 4 active hydrogen atoms. In a further embodiment, the initiator is a polyhydric initiator.

The polyols will have an equivalent weight of at least about 500 and preferably at least about 750 up to about 1,500 or up to about 2,000. In one embodiment, polyether polyols having a molecular weight of 4,000 and above, based on trihydric initiators are used.

The conversion of the polyether to a polyoxyalkyleneamine can be done by methods known in the art. For example by reductive amination, as described, for example in USP 3,654,370.

Polyoxyalkyleneamines may be represented by the general formula 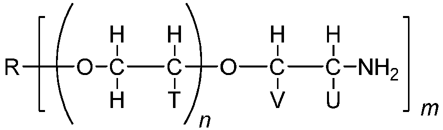 wherein R is the nucleus of an oxyalkylation-susceptible initiator containing 2-12 carbon atoms and 2 to 8 active hydrogen groups, U is an alkyl group containing 1-4 carbon atoms, T and V are independently hydrogen or U, n is number selected to provide a polyol having a molecular weight of as described above and m is an integer of 2 to 8 corresponding to the number of active hydrogen groups originally present in the initiator. In one embodiment, n will have a value of 35 to 100. In a further embodiment R has 2 to 6 or 2 to 4 active hydrogen groups. In another embodiment, the active hydrogen groups are hydroxyl groups. In another embodiment, R is an aliphatic polyhydric initiator. In a further embodiment, R has 3 active hydrogen groups. In further embodiments, n will be less than 90, less than 80, less than 75, or less than 65. In a further embodiment U, T and V are each methyl groups. Based on the molecular weight of the polyol, the polyoxyalkyleneamine will generally have an amine equivalent weight of from about 900 to about 4,000. In a further embodiment the amine equivalent weight will be less than 3,000. In the practice of this invention, a single molecular weight polyoxyalkyleneamine may be used. Also, mixtures of different polyoxyalkyleneamines, such as mixtures of tri- and higher functional materials and/or different molecular weight or different chemical composition materials, may be used.

Examples of polyoxyalkyleneamine commercially available are for examples; JEFFAMINE™ D-4000 and JEFFAMINE™ T-5000 form Huntsman Corporation.

The epoxy resins used in producing the epoxy terminated prepolymers are compounds containing at least one vicinal epoxy group. The epoxy resin may be saturated or unsaturated, aliphatic, cycloaliphatic, aromatic or heterocyclic and may be substituted. The epoxy resin may also be monomeric or polymeric. Preferably the epoxy terminated prepolymer has a viscosity equal to or less than 10,000 Pa.s at room temperature.

In one embodiment, the epoxy resin component is a polyepoxide. Polyepoxide as used herein refers to a compound or mixture of compounds wherein at least one of the compounds contains more than one epoxy moiety. Polyepoxide as used herein also includes advanced or partially advanced epoxy resins, that is, the reaction of a polyepoxide and a chain extender, wherein the resulting epoxy reaction product has, on average, more than one unreacted epoxide unit per molecule. The epoxy resin component may be a solid or liquid at ambient temperature (10°C and above). Generally, a "solid epoxy resin" or "SER" is an epoxy-functional resin that has a Tg generally greater than about 30 'C. While the epoxy resin may be a solid, the final epoxy terminated prepolymer will be a liquid at ambient temperature. For ease of handling, in one embodiment the epoxy resin is a liquid at ambient temperatures.

In one embodiment the epoxy resin may be represented by the formula 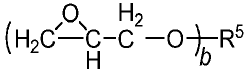 wherein R⁵ is C₆ to C₁₈ substituted or unsubstituted aromatic, a C₁ to C₈ aliphatic, or cycloaliphatic; or heterocyclic polyvalent group and b has an average value of from 1 to less than about 8.

Aliphatic polyepoxides may be prepared from the known reaction of epihalohydrins and polyglycols. Examples of aliphatic epoxides include trimethylpropane epoxide, and diglycidyl-1,2-cyclohexane dicarboxylate.

Other epoxies which can be employed herein include, epoxy resins such as, for example, the glycidyl ethers of polyhydric phenols or epoxy resins prepared from an epihalohydrin and a phenol or phenol type compound.

The phenol type compound includes compounds having an average of more than one aromatic hydroxyl group per molecule. Examples of phenol type compounds include dihydroxy phenols, biphenols, bisphenols, halogenated biphenols, halogenated bisphenols, hydrogenated bisphenols, alkylated biphenols, alkylated bisphenols, trisphenols, phenol-aldehyde resins, novolac resins (i.e. the reaction product of phenols and simple aldehydes, preferably formaldehyde), halogenated phenol-aldehyde novolac resins, substituted phenol-aldehyde novolac resins, phenol-hydrocarbon resins, substituted phenol-hydrocarbon resins, phenolhydroxybenzaldehyde resins, alkylated phenol- hydroxybenzaldehyde resins, hydrocarbon-phenol resins, hydrocarbon- halogenated phenol resins, hydrocarbon-alkylated phenol resins, or combinations thereof.

Examples of bisphenol A based epoxy resins useful in the present invention include commercially available resins such as D.E.R. ™ 300 series and D.E.R. ™ 600 series, commercially available from The Dow Chemical Company. Examples of epoxy novolac resins useful in the present invention include commercially available resins such as D.E.N. ™ 400 series, commercially available from The Dow Chemical Company.

In a further embodiment, the epoxy resin compounds may be a resin from an epihalohydrin and resorcinol, catechol, hydroquinone, biphenol, bisphenol A, bisphenol AP (1,1-bis(4-hydroxyphenyl)-1-phenyl ethane), bisphenol F, bisphenol K, bisphenol S, tetrabromobisphenol A, phenol-formaldehyde novolac resins, alkyl substituted phenol-formaldehyde resins, phenol- hydroxybenzaldehyde resins, cresol-hydroxybenzaldehyde resins, dicyclopentadiene-phenol resins, dicyclopentadiene-substituted phenol resins, tetramethylbiphenol, tetramethyl-tetrabromobiphenol, tetramethyltribromobiphenol, tetrachlorobisphenol A, or combinations thereof.

In another embodiment, the epoxy resin includes those resins produced from an epihalohydrin and an amine. Suitable amines include diaminodiphenylmethane, aminophenol, xylene diamine, anilines, and the like, or combinations thereof.

In another embodiment, include those resins produced from an epihalohydrin and a carboxylic acid. Suitable carboxylic acids include phthalic acid, isophthalic acid, terephthalic acid, tetrahydro- and/or hexahydrophthalic acid, endomethylenetetrahydrophthalic acid, isophthalic acid, methylhexahydrophthalic acid, and the like or combinations thereof

Other useful epoxide compounds which can be used in the practice of the present invention are cycloaliphatic epoxides. A cycloaliphatic epoxide consists of a saturated carbon ring having an epoxy oxygen bonded to two vicinal atoms in the carbon ring for example as illustrated by the following general formula: 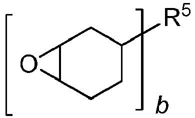 wherein R⁵ and b are as defined above.

The cycloaliphatic epoxide may be a monoepoxide, a diepoxide, a polyepoxide, or a mixture of those. For example, any of the cycloaliphatic epoxide described in U.S. Patent No. 3,686,359, may be used in the present invention. As an illustration, the cycloaliphatic epoxides that may be used in the present invention include, for example, (3,4-epoxycyclohexyl-methyl)-3,4-epoxy-cyclohexane carboxylate, bis-(3,4-epoxycyclohexyl) adipate, vinylcyclohexene monoxide and mixtures thereof.

Another class of epoxy resins useful in the present invention are based on divinylarene oxide product illustrated generally by general chemical Structures I -IV as follows

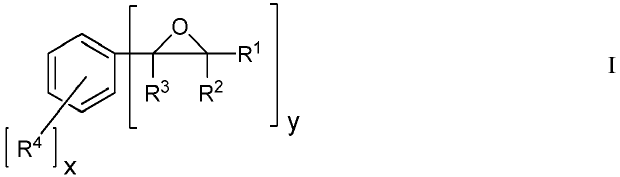

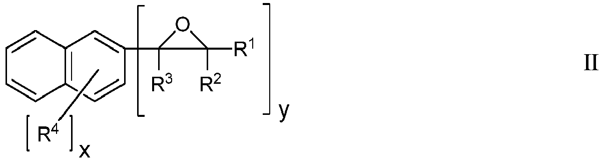

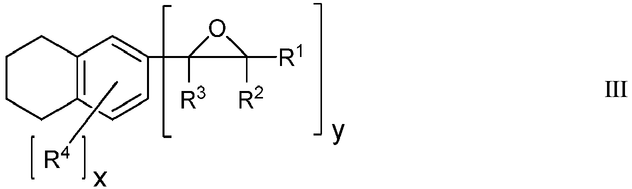

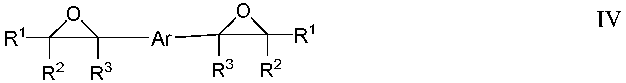

In the above Structures I, II, III and IV of the divinylarene dioxide product of the present invention, each R¹, R², R³ and R⁴ individually may be hydrogen, an alkyl, cycloalkyl, an aryl or an aralkyl group; or a oxidant-resistant group including for example a halogen, a nitro, an isocyanate, or an RO group, wherein R may be an alkyl, aryl or an alkyl; x may be an integer of 0 to 4; y may be an integer greater than or equal to 2; x+y may be an integer less than or equal to 6; z may be an integer of 0 to 6; and z+y may be an integer less than or equal to 8; and Ar is an arene fragment including for example, 1,3-phenylene group.

In certain embodiments of the divinylarene dioxide products the alkyl moiety will have from 1 to 36 carbon atoms. In further embodiments the alkyl will have less than 24, or less than 18 carbon atoms. In further embodiments the alkyl will have from 1 to 8 or from 1 to 6 carbon atoms. Similarly the cycloalkyl will contain from 5 to 36 carbon atoms. Generally the cycloalkyl will contain from 5 to 24 carbon atoms.

The aryl moiety present in the divinylarene dioxide will generally contain 12 carbon atoms or less. An aralkyl group will generally contain 6 to 20 carbon atoms.

The divinylarene dioxide product produced by the process of the present invention may include for example alkyl-vinyl-arene monoxides depending on the presence of alkylvinylarene in the starting material.

In one embodiment of the present invention, the divinylarene dioxide produced by the process of the present invention may include for example divinylbenzene dioxide, divinylnaphthalene dioxide, divinylbiphenyl dioxide, divinyldiphenylether dioxide, and mixtures thereof.

Optionally, the epoxy resin may also contain a halogenated or halogen-containing epoxy resin compound. Halogen-containing epoxy resins are compounds containing at least one vicinal epoxy group and at least one halogen. The halogen can be, for example, chlorine or bromine, and is preferably bromine. Examples of halogen-containing epoxy resins useful in the present invention include diglycidyl ether of tetrabromobisphenol A and derivatives thereof. Examples of the epoxy resin useful in the present invention include commercially available resins such as D.E.R. ™ 500 series, commercially available from The Dow Chemical Company.

In general, the epoxy resin has a number average molecular weight of less than 20,000 g/mol, preferably less than 10,000 g/mol, and more preferably less than 8,000 g/mol. Generally, the epoxy resins useful in the present invention have an average molecular weight of from about 200 g/mol to about 10,000 g/mol, preferably from about 200 g/mol to about 5,000 g/mol, and more preferably from about 200 g/mol to about 1,000 g/mol.

The epoxide equivalent weight of the epoxy resins is generally from about 100 to about 8000 and more preferably from about 100 to about 4000. As used herein the terms "epoxide equivalent weight" ("EEW") refers to the average molecular weight of the polyepoxide molecule divided by the average number of oxirane groups present in the molecule. The diepoxides useful in the present invention are the epoxy resins having an epoxy equivalent weight of from about 100 to about 500.

The relative amount of epoxy resin employed to make the prepolymer can be varied over wide ranges. Generally the epoxy resin used should be at present in a ratio of at least 3 epoxy groups per amino hydrogen atoms to avoid prepolymer gelling. In further embodiments the ratio of oxirane moieties per amine hydrogen is at least 5, at least 10 and generally up to 20 to 1. In one embodiment, the prepolymer is formed by reacting no less than 4 moles of polyepoxide resin per mole of diamine at temperatures in the range of about 80°C for not less than 1 hour with constant stirring. Exact temperatures and duration depend on the reactivity of the polyepoxide resins being utilized.

The conditions for reaction of the epoxy resin with the polyoxyalkyleneamine are well known in the art. Generally, when using a polyoxyalkyleneamine and epoxy resin which a liquid at ambient temperatures, no solvent is needed. To promote the reaction, the mixture of polyoxyalkyleneamine and epoxy resin is heated to between 70 to 150°C for sufficient time to react the reactive hydrogen atoms available. Optionally the reaction may be carried out in the presence of conventional catalysts that promote the reaction between amines and epoxides. Optionally the reaction may be carried out in the presence of solvents suitable for dissolving the amine and/or epoxy.

In one embodiment of the present invention, the epoxy-terminated prepolymer may be blended with one or more additional epoxy resin after the reaction of original epoxy resin and polyoxyalkyleneamine is complete. Suitable additional resins are described herein above, preferably an epoxide of poly(propylene glycol). The additional epoxy resin can be a single epoxy resin as described above or can be mixture of above epoxy resins. In general, the proportion of the additional epoxy resin can be as much as 100 parts per 100 parts of the epoxy-terminated prepolymer.

In another embodiment of the present invention, the epoxy-terminated prepolymer may be blended with one or more acrylate monomer. Examples of suitable acrylate monomers include 1,6-hexanediol diacrylate, trimethylolpropane triacrylate, pentaerythritol tetraacrylate, and the like. In general, the proportion of the acrylate monomer can be as much as 20 parts per 100 parts of the epoxy-terminated prepolymer or the aggregate of epoxy-terminated prepolymer and epoxy resins.

In another embodiment of the present invention, a filler may be added to the insulation material. Suitable fillers are calcium carbonate, silica, talc or silane treated silica for better compatibility with the matrix. Preferably, fillers such as hollow glass microspheres can be added to reduce the thermal conductivity and density of the cured networks to provide improved thermal insulation.

In another embodiment of the present invention, one or more other additives may be added to the insulation material, For example organic compounds, metallic compounds, organometallic compounds, thickeners, dispersing agents, pigments, antistatic agents, corrosion inhibitors, preservatives, siliconizing agents, rheology modifiers, anti-settling agents, anti-oxidants.

In one embodiment, the final epoxy-terminated prepolymer will be a liquid at ambient temperature, that is, generally a liquid at 25°C and above. In a further embodiment, the epoxy-terminated prepolymer will be a liquid at 20°C and above. In another embodiment the epoxy-terminated prepolymer will be a liquid at 15°C and above. By liquid, it is inferred that the material is pourable or pumpable.

In the second step of making the epoxy based elastomer of the present invention, the epoxy prepolymer is reacted with a curing agent, preferably an amine terminated curing agent. The amine curing agent is a monoamine or a polyamine having an equivalent weight of less than 200 and having 2 to 5 active hydrogen atoms. Generally the amine curing agent will have an equivalent weight of at least 20. The amino equivalent weight means the molecular weight of the curing agent divided by the number of amine active hydrogen atoms. In a further embodiment, the amine or polyamine has from 2 to 4 active hydrogen atoms. In yet another embodiment, the amine curing agent has 2 amino active hydrogen atoms.

The curing of the elastomer is generally done at a temperature higher than ambient temperature. As it is generally desirable to have a short curing time when making articles, the curing agent is selected to give a curing time (demold) of less than 30 minutes when the molds are heated at approximately 100°C. In a further embodiment, the curing time is less than 20 minutes. In a further embodiment the curing time is less than 15 minutes. The amine curing agent is generally added to provide 0.8 to 1.5 amine equivalents (NH) per epoxy reactive group. In a further embodiment the ratio is from 0.9 to 1.1.

Examples of suitable amine curing agents for use in the present invention include those represented by the following formula: 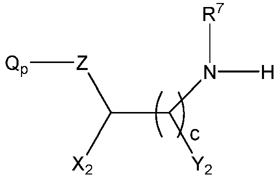 wherein R⁷, Q, X, and Y at each occurrence are independently H, C1-C14 aliphatic, C3-C10 cycloaliphatic, or C6-C14 aromatic or X and Y can link to form a cyclic structure; Z is O, C, S, N, or P; and c is 1 to 8: p is 1 to 3 depending on the valence of Z.

In one embodiment Z is oxygen. In a further embodiment Z is oxygen and R⁷ is hydrogen. In another embodiment X and Y are both hydrogen.

Cyclic diamine as represented by the following formula may also be used as curing agents in the present invention: 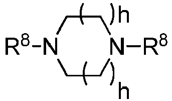 wherein R⁸ at each occurrence is independently H or -CH₂CH₂NH₂ and h is 0-2 with the proviso that both h's cannot be 0.

Aromatic amine curing agents may also be used such as toluene-2,4-diamine; toluene-2,6-diamine, isomers of phenylene diamine; aniline; and the like.

In another embodiment the amine curing agent can be the steric and geometric isomers of isophorone diamine, cyclohexane-diyldimethanamine, or cyclohexane diamine.

Examples of specific amine-terminated curing agents include: monoethanolamine; 1-amino-2-propanol; 1-amino-3-propanol; 1-amino-2-butanol; 2-amino-1-butanol; isophorone diamine; piperazine; homopiperazine; butylamine; ethylene diamine; hexamethylene diamine; and mixtures thereof. In one embodiment the amine curing agent is an alkanolamine.

In a further embodiment, amine terminated polyethers having an equivalent weight of less than 200, such as JEFFAMINE™ D-400 from Huntsman Chemical Company.

In certain embodiments, the curing may contain a combination of an aliphatic and an aromatic curing agent to have a staged curing process. The combination of amine curing agents allows a first curing step, generally done at 70°C to 80°C whereby the aliphatic amine reacts with the epoxy moiety to form a prepreg, and a second curing step done at temperatures above 80°C for curing with the aromatic amine.

If desired, other additives which may be used with the elastomers of the present invention include flame retarding agents, plasticizers, antioxidants, UV stabilizers, adhesion promoters, dyes, pigments, fillers, and reinforcing agents. For example, for modifying the thermal conductivity, fillers such as glass hollow spheres may be added. If desired, viscosity modifying agents known in the art may be added. Examples of such additives include diglycidyl ether of butane diol, glycidyl ethers of fatty acid or natural oils or TEP (tri ethyl phosphate, (C₂H₅)₃PO₄).

In one embodiment, the epoxy terminated prepolymer, curing agent and optional additives are introduced into the mold, the mold is closed and the reaction mixture is allowed to cure. In such applications, the mold is generally heated to between 80°C and 120°C.

Alternatively, the elastomeric resin may be produced by a one shot-method wherein the amine terminated polyether, epoxy resin, curing agent and optional additional additives, are mixed at 50°C to 150°C and then injected into a mold. In such a one shot process, an epoxy-terminated prepolymer cannot be isolated as per the two step process described above. In such a one-shot process, the cure and demold times are generally from 3 to 24 hours at 125°C.

The thickness of the cured insulation layer is dependent on the thermal insulation requirements. Typical thickness can range from equal to or greater than 0.5 inches (1.3 cm) to equal to or less than 5 inches (13 cm), preferably the insulation layer has a thickness of from 1 to 3 inches (2.5 to 7.6 cm).

Referring now to the drawings, specific details are set forth in order to provide a more thorough understanding of the present invention. However, this is only one embodiment of the present invention and the invention may be practiced without these specific particulars. Accordingly, the specification and drawings are to be regarded in an illustrative, rather than a restrictive, sense.

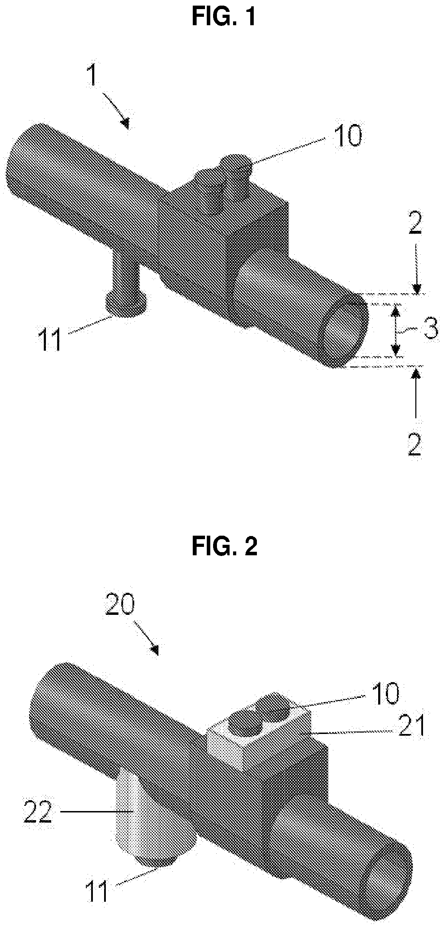

**FIG. 1** shows a pipe **1** having an outside surface with an outside diameter **2** and an inside surface having an inside diameter **3** with two branches, a double valve **10** having an outside surface and a single valve **11** having an outside surface. **FIG. 2** shows the pipe with branches depicted in **FIG.** 1 wherein two preforms, each having a topside and a bottom side, have been provided to the outside surface of each branch, preform **21** provided to the double valve **10** and preform **22** to the single valve **11** to form the pipe/preform assembly **20**.

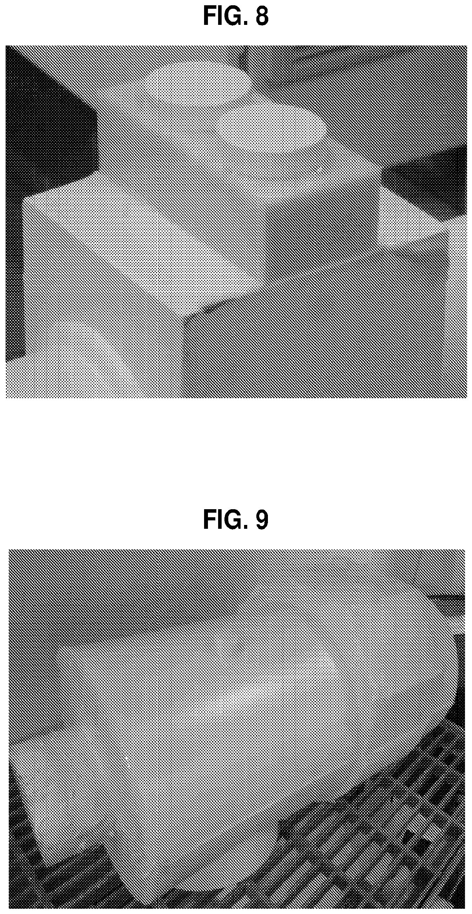

In the embodiment shown in these drawings, the bottom side surface of each preform **21** and **22** completely contacts the outside surface of the pipe **1** and each preform **21** and **22** completely surrounds each valve **10** and **11** with the inside surface of each preform **21** and **22** completely in contact with the outside surface of the valves **10** and **11**, respectively (also see **FIG. 8**).

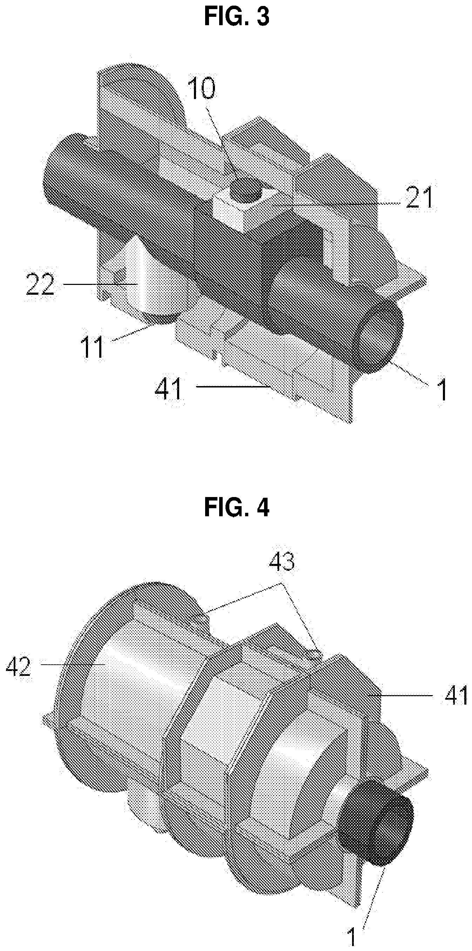

**FIG. 3** shows the pipe/preform assembly **20** with one half **41** of a mold surrounding it. **FIG. 4** shows the pipe/preform assembly with two halves **41** and **42** of a mold assembled and surrounding the pipe/preform assembly **20**. The mold has two injection ports **43** where the insulation material is injected into the closed mold. The mold also has several vents **44** (not shown in the drawings) to allow for the displaced air to escape when the insulation material is injected into the assembled mold.

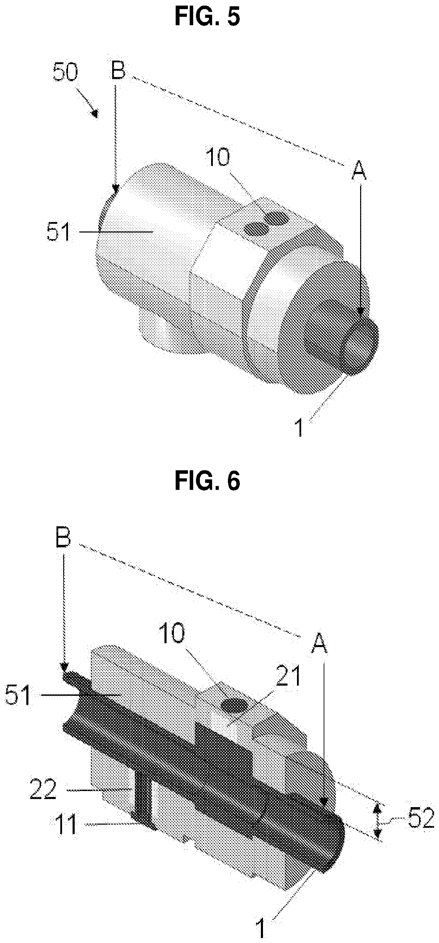

After the insulation material is injected into the mold and allowed to cure or harden, the mold is removed to provide an insulated pipe/preform assembly **50.** **FIG. 5** shows the pipe/preform assembly **20** coated with a layer of insulation **51**. The insulated pipe/preform assembly has a nominal thickness **52**, **FIG. 6**.

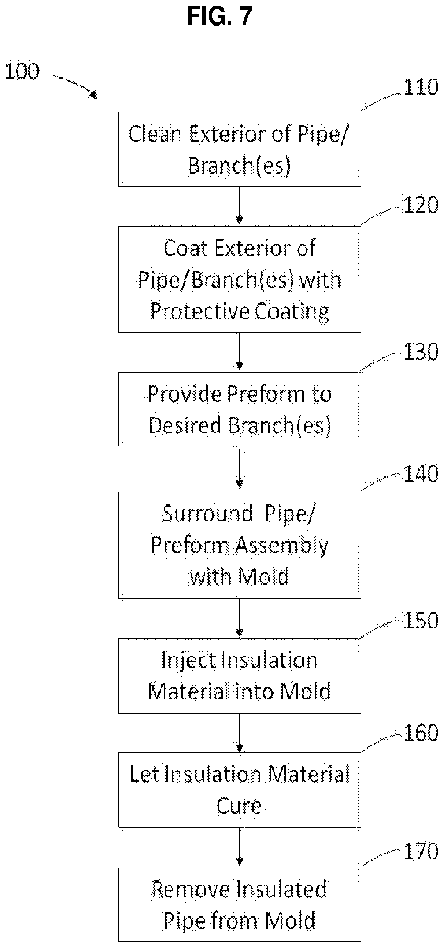

The steps of one embodiment of the process of the present invention are shown in the flow chart illustrated in **FIG. 7**.

### EXAMPLE

Example 1 is a pipe insulated by the process of the present invention, **FIG. 1**. The section of pipe to be coated is schedule 160 steel pipe having an outside diameter of 4.5 inches (11 cm), inside diameter of 3.4 inches (8.6 cm), and a length of 28.25 inches (71.76 cm). The pipe comprises two branches, a single valve and a double valve, each are on opposing sides and at opposite ends of the pipe. Prior to providing the preform to the pipe, the outside surfaces of the pipe and valves are coated with a two component high build amine adduct cured novolac phenolic epoxy finish available as PHENGUARD™ 940 from PPG, abraded with 80 grit sandpaper, and cleaned with acetone.

To the outside surfaces of each valve is provided a preform providing a pipe/preform assembly. The preforms comprise a hybrid polyether thermoset available as NEPTUNE™ C Insulation from The Dow Chemical Company. The preforms are provided by molding them directly to the pipe by surrounding the valve with a mold made of dualfoil, pouring the reactive preform material into the mold and letting them cure until solid. For the double-valve branch the preform is rectangular measuring 5.5 inches (14 cm) by 2.5 inches (6.4 cm) by 2 inches (5.1 cm) in thickness. For the single value branch, the preform was cylindrical having a diameter of 3.1 inches (7,9 cm).

After the preform material has cured, the pipe/preform assembly is surrounded by a TEFLON™ coated steel mold with 2 injection ports and 2 vents. The mold comprises two halves that are bolted together. A gasket is applied to the joints of the mold using a silicone based gasket material that is allowed to cure fully before assembly of the mold pieces. The mold and insulation material are both preheated to 50°C. The 50°C NEPTUNE C Insulation is mixed with room temperature NEPTUNE Curative C available from The Dow Chemical Company at using a 15.2:1 ratio injected into the mold. The mixing is done on an ESCO 25-CE metering and dispensing process machine. The mixed material is pumped into the mold around the pipe until it is filled.

The insulation cures for 16 hours the mold is removed to provide an insulated pipe/preform assembly of the present invention, **FIG. 9**.

### Stress Analysis.

Computer assisted stress analysis is preformed using finite element analysis (FEA software ABAQUS™ from Dassault Systèmes is used for the analysis) wherein a pipe with valves such as the one described in Example 1 is modeled. The FEA modeling includes the geometry of the pipe and branches along with the mold utilized to mold the insulation. The curing of the insulation after initial injection is modeled to include the exothermic reaction, cure, chemical shrinkage, and subsequent thermal shrinkage of the insulation during cooling. The NEPTUNE coating properties used in the simulation are measured based on ASTM standards. ASTM D638 Type IV sample are used in measuring the tensile properties, such as modulus and tensile strength. ASTM E831 was followed in measuring the Coefficient of Linear Thermal Expansion. The material characteristics such as chemical shrinkage, thermal expansion, and the stress - strain relationship are entered into the analysis as a function of temperature.

The analysis begins with an FEA heat transfer step, including the impact of cure. At the point of gelation, structural FEA is engaged to track the stress within the part as the temperature changes and thermal expansion differences impact the insulation.

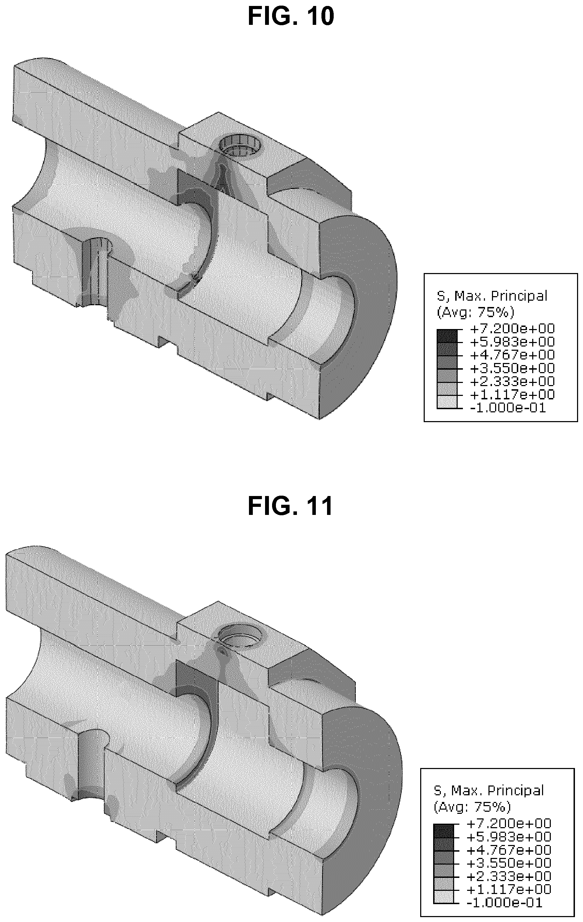

Plots of the predicted results of the stress analysis of a pipe/preform assembly are shown in **FIG. 10** and **FIG. 11. FIG 10** highlights the predicted stress for a pipe with no preforms and **FIG. 11** shows the reduced stress when the present invention is utilized. As can be seen the high stress at the double valve area is reduced substantially when a preform is used. Likewise, the stress in the single valve area is also reduced with the use of a preform.

## Claims

1. A process for insulating a pipe comprising one or more branch comprising the steps of:
(i) providing a preform which is in contact with the pipe and either in contact with the branch or at a distance from the branch equal to or less than the thickness of the layer of insulating material to be molded around the pipe/preform assembly, to form a pipe/preform assembly
and
(ii) molding a layer of insulating material around the pipe/preform assembly.

2. The process of Claim 1 wherein the pipe has one or more branch selected from a tee, a valve, a double valve, a vent, a port, or a flange.

3. The process of Claim 1 further comprising the step of:
(i)(a) adhering the preform to the pipe, the branch, or the pipe and the branch.

4. The process of Claim 1 further comprising the steps of:
(i)(b) positioning a mold around the pipe/preform assembly
and
(i)(c) casting the insulating material between the pipe/preform assembly and the mold.

5. The process of Claim 1 further comprising the step of cleaning the pipe prior to providing the preform.

6. The process of Claim 5 further comprising the step of providing a protective coating to the pipe after it has been cleaned but before the preform is provided.

7. The process of Claim 1 wherein the insulating material comprises the reaction product of:
(a) an ambient temperature liquid epoxy-terminated prepolymer and
(b) a catalytic curing agent or a co-reactive curing agent.

8. The process of Claim 7 wherein the co-reactive curing agent comprise a polyamine, a polyamide, a polyaminoamide, a dicyandiamide, a polyphenol, a polymeric thiol, a polycarboxylic acid, an anhydride, a phenol novolac, a bisphenol-A novolac, a phenol novolac of dicyclopentadiene, a cresol novolac, a diaminodiphenylsulfone, or a styrene-maleic acid anhydride (SMA) copolymers.

9. The process of Claim 7 wherein the catalytic curing agent comprise ethyltriphenylphosphonium; benzyltrimethylammonium chloride; a heterocyclic nitrogen-containing catalyst; an imidazole; a triethylamine; or dodecylbenzenesulfonic acid in isopropanol.

10. The process of Claim 7 wherein the insulating material further comprises one or more additional epoxy resin.

11. The process of Claim 1 wherein the insulating material further comprises one or more of a filler, a thickener, a dispersing agent, a pigment, an antistatic agent, a corrosion inhibitor, a preservative, a siliconizing agent, a rheology modifier, an anti-settling agent, or an anti-oxidants.

12. The process of Claim 1 wherein the insulating material is useful for thermal insulation for subsea oil and gas applications.

## Patentansprüche

1. Ein Verfahren zum Isolieren eines Rohrs, beinhaltend einen oder mehrere Abzweigungen, beinhaltend die folgenden Schritte:
(i) Bereitstellen eines Vorformlings, der sich in Kontakt mit dem Rohr und entweder in Kontakt mit der Abzweigung oder in einem Abstand von der Abzweigung befindet, der gleich oder kleiner als die Dicke der Schicht aus Isoliermaterial ist, die um die Rohr-/Vorformling-Anordnung geformt werden soll, um eine Rohr-/Vorformling-Anordnung zu bilden,
und
(ii) Formen einer Schicht aus Isoliermaterial um die Rohr-/Vorformling-Anordnung.

2. Verfahren gemäß Anspruch 1, wobei das Rohr eine oder mehrere Abzweigungen aufweist, die aus einem T-Stück, einem Ventil, einem Doppelventil, einer Entlüftung, einem Anschluss oder einem Flansch ausgewählt sind.

3. Verfahren gemäß Anspruch 1, ferner beinhaltend den folgenden Schritt:
(i)(a) Ankleben des Vorformlings an das Rohr, die Abzweigung oder das Rohr und die Abzweigung.

4. Verfahren gemäß Anspruch 1, ferner beinhaltend die folgenden Schritte:
(i)(b) Positionieren einer Form um die Rohr-/Vorformling-Anordnung
und
(i)(c) Gießen des Isoliermaterials zwischen die Rohr-/Vorformling-Anordnung und die Form.

5. Verfahren gemäß Anspruch 1, ferner beinhaltend den Schritt des Reinigens des Rohrs vor dem Bereitstellen des Vorformlings.

6. Verfahren gemäß Anspruch 5, ferner beinhaltend den Schritt des Bereitstellens einer Schutzbeschichtung für das Rohr, nachdem es gereinigt wurde, aber bevor der Vorformling bereitgestellt wird.

7. Verfahren gemäß Anspruch 1, wobei das Isoliermaterial das Reaktionsprodukt von Folgendem beinhaltet:
(a) einem bei Umgebungstemperatur flüssigen epoxidterminierten Prepolymer und
(b) einem katalytischen Härtungsmittel oder einem coreaktiven Härtungsmittel.

8. Verfahren gemäß Anspruch 7, wobei das coreaktive Härtungsmittel ein Polyamin, ein Polyamid, ein Polyaminoamid, ein Dicyandiamid, ein Polyphenol, ein polymeres Thiol, eine Polycarbonsäure, ein Anhydrid, einen Phenolnovolak, einen Bisphenol-A-Novolak, einen Phenolnovolak von Dicyclopentadien, einen Cresolnovolak, ein Diaminodiphenylsulfon oder ein Styrol-Maleinsäureanhydrid(SMA)-Copolymer beinhaltet.

9. Verfahren gemäß Anspruch 7, wobei das katalytische Härtungsmittel Ethyltriphenylphosphonium; Benzyltrimethylammoniumchlorid; einen heterocyclischen Stickstoff enthaltenden Katalysator; ein Imidazol; ein Triethylamin; oder Dodecylbenzolsulfonsäure in Isopropanol beinhaltet.

10. Verfahren gemäß Anspruch 7, wobei das Isoliermaterial ferner ein oder mehrere zusätzliche Epoxidharze beinhaltet.

11. Verfahren gemäß Anspruch 1, wobei das Isoliermaterial ferner eines oder mehrere von Folgendem beinhaltet: einem Füllstoff, einem Verdickungsmittel, einem Dispergiermittel, einem Pigment, einem Antistatikmittel, einem Korrosionsinhibitor, einem Konservierungsmittel, einem Silikonisierungsmittel, einem Rheologiemodifizierungsmittel, einem Antiabsetzmittel oder einem Antioxidationsmittel.

12. Verfahren gemäß Anspruch 1, wobei das Isoliermaterial zur thermischen Isolierung für unterseeische Öl- und Gasanwendungen geeignet ist.

## Revendications

1. Un procédé pour isoler une conduite comprenant une ou plusieurs branches comprenant les étapes consistant à :
(i) fournir une préforme qui est en contact avec la conduite et soit en contact avec la branche, soit à une distance de la branche égale ou inférieure à l'épaisseur de la couche de matériau isolant à mouler autour de l'assemblage conduite/préforme, pour former un assemblage conduite/préforme
et
(ii) mouler une couche de matériau isolant autour de l'assemblage conduite/préforme.

2. Le procédé de la revendication 1 dans lequel la conduite a une ou plusieurs branches sélectionnées parmi un raccord en T, une soupape, une soupape double, un évent, un orifice, ou une bride.

3. Le procédé de la revendication 1 comprenant en outre l'étape consistant à :
(i)(a) faire adhérer la préforme à la conduite, la branche, ou la conduite et la branche.

4. Le procédé de la revendication 1 comprenant en outre les étapes consistant à :
(i)(b) positionner un moule autour de l'assemblage conduite/préforme
et
(i)(c) couler le matériau isolant entre l'assemblage conduite/préforme et le moule.

5. Le procédé de la revendication 1 comprenant en outre l'étape consistant à nettoyer la conduite avant de fournir la préforme.

6. Le procédé de la revendication 5 comprenant en outre l'étape consistant à fournir un revêtement protecteur à la conduite après qu'elle a été nettoyée mais avant que la préforme ne soit fournie.

7. Le procédé de la revendication 1 dans lequel le matériau isolant comprend le produit de réaction :
(a) d'un prépolymère à terminaison époxy liquide à température ambiante
et
(b) d'un agent de durcissement catalytique ou d'un agent de durcissement co-réactif.

8. Le procédé de la revendication 7 dans lequel l'agent de durcissement co-réactif comprend une polyamine, un polyamide, un polyaminoamide, un dicyandiamide, un polyphénol, un thiol polymère, un acide polycarboxylique, un anhydride, une novolaque phénolique, une novolaque de bisphénol-A, une novolaque phénolique de dicyclopentadiène, une novolaque de crésol, une diaminodiphénylsulfone, ou un copolymère anhydride styrène-acide maléique (SMA).

9. Le procédé de la revendication 7 dans lequel l'agent de durcissement catalytique comprend de l'éthyltriphénylphosphonium ; du chlorure de benzyltriméthylammonium ; un catalyseur hétérocyclique contenant de l'azote ; un imidazole ; une triéthylamine ; ou de l'acide dodécylbenzènesulfonique dans de l'isopropanol.

10. Le procédé de la revendication 7 dans lequel le matériau isolant comprend en outre une ou plusieurs résines époxy supplémentaires.

11. Le procédé de la revendication 1 dans lequel le matériau isolant comprend en outre un ou plusieurs éléments parmi une charge, un épaississant, un agent de dispersion, un pigment, un agent antistatique, un inhibiteur de corrosion, un conservateur, un agent de siliconage, un modificateur de rhéologie, un agent anti-sédimentation, ou un antioxydant.

12. Le procédé de la revendication 1 dans lequel le matériau isolant est utile pour une isolation thermique pour des applications pétrolières et gazières sous-marines.
